# EUROPÄISCHE PATENTSCHRIFT

(11) **EP 2 144 509 B1**
(45) Veröffentlichungstag und Bekanntmachung des Hinweises auf die Patenterteilung: **31.08.2011**
(21) Anmeldenummer: 08758402.5
(22) Anmeldetag: 07.05.2008
(51) Int. Cl.: A21D 8/02, A23L 1/00, A21D 13/00

(54) **VERFAHREN ZUR HERSTELLUNG EINER BACKWARE**
METHOD FOR PRODUCING A BAKERY PRODUCT
PROCÉDÉ POUR FABRIQUER UN PRODUIT DE BOULANGERIE

(30) Priorität: 08.05.2007 DE 102007021583
(43) Veröffentlichungstag der Anmeldung: 20.01.2010
(73) Patentinhaber: Bahlsen GmbH & Co. KG, 30163 Hannover (DE)
(72) Erfinder: HABBEL, Martin, 33659 Bielefeld (DE); GROVE, Karsten, 31174 Dingelbe (DE)
(74) Vertreter: Weber, Joachim
(86) Internationale Anmeldenummer: PCT/EP2008/003672
(87) Internationale Veröffentlichungsnummer: WO 2008/135286

(56) Entgegenhaltungen:
- DE-A1- 2 135 843
- FR-A- 2 790 644
- GB-A- 1 516 943
- US-A- 4 738 859
- US-A- 4 774 095
- SULTAN WILLIAM J: "Practical baking" 1976, THE AVI PUBLISIHING COMPANY INC. , WESTPORT, CONNECTICUT , XP002491711 Seite 430 - Seite 431; Abbildung 420

## Beschreibung

Die Erfindung bezieht sich auf ein Verfahren zur Herstellung einer Backware.

Insbesondere bezieht sich die Erfindung auf ein Verfahren zur Herstellung einer Backware, welche ähnlich einem Keks oder einer Dauerbackware ist.

Die FR-A-2 790 644 offenbart ein Herstellverfahren für ein zylinderförmiges, festes Biskuit-Teil, in dessen Zentrum eine Ausnehmung ausgebildet wird. Das Ausbilden der Ausnehmung erfolgt durch Einbringen eines Formelements während des Backvorgangs. In die somit erzeugte Backware kann dann nach deren Abkühlung in die Ausnehmung eine Füllung, beispielsweise eine Schokofüllung, eingefüllt werden, welche mit einem separaten Deckel abgedeckt wird.

Aus der US-A-4 774 095 ist ein Backprodukt bekannt, bei welchem eine Füllung eingebracht wird, welche Fasern enthält und in welche weitere Zusatzobjekte eingebracht werden können.

Die US-A-4 738 859 offenbart ein Verfahren zur Keksherstellung, bei welchem ein kontinuierlicher Teig-Rohling mit Zusatzobjekten belegt wird, bevor er nachfolgend in einzelne Stücke zertrennt wird.

Auch die Veröffentlichung von Sultan William J: "Practical baking" 1976, The AVI Publishing Company Inc., Westport, Connecticut, XP002491711, zeigt lediglich ein rundes Mandelgebäck, in dessen Mitte nach dem Backvorgang Marmelade oder Gelee eingebracht wird.

Aus der GB-A-1 516 943 ist es als bekannt angegeben, vor dem Backen eine Füllung in eine Ausnehmung des Teiglings einzufüllen.

Die DE 21 35 843 A1 offenbart ein Verfahren zur Herstellung von Knuspergebäck, bei welchem die Bestandteile einer zu verwendenden Mischung gemeinsam zu einem pulverartigen Granulat verarbeitet werden und ohne weitere Bearbeitung trocken auf ein Backblech oder eine essbare Unterlage aufgebracht und erhitzt, vorzugsweise gebacken werden.

Der Erfindung liegt die Aufgabe zugrunde, eine Backware zu schaffen, welche bei einfacher und qualitativ hochwertiger Herstellung lange haltbar ist und einen hohen Verzehrgenuss bietet.

Erfindungsgemäß wird die Aufgabe durch die Merkmalskombination der Ansprüche 1 und 10 gelöst, die Unteransprüche zeigen weitere vorteilhafte Ausgestaltungen der Erfindung.

Erfindungsgemäß ist ein Verfahren zur Herstellung einer Backware geschaffen, welche in ihrem grundsätzlichen Aufbau einem Keks oder einer Dauerbackware gleicht, welche jedoch mit Zusatzobjekten, beispielsweise Nüssen, einer Nussmischung, Erdnüssen oder Ähnlichem belegt ist. Dabei erfolgt die Belegung und Fixierung der Zusatzobjekte so, dass diese in einfacher Weise aufgebracht und fixiert werden können und über einen langen Zeitraum auch während des Transports fixiert bleiben.

Erfindungsgemäß ist somit vorgesehen, dass zunächst ein Teig für einen Keks, eine Dauerbackware oder Ähnliches hergestellt wird. Der Teig kann beispielsweise mittels eines Trommelkneters gefertigt werden.

In einem nächsten Arbeitsschritt erfolgt die Teigausformung, beispielsweise mittels eines HB-Formers. Es wird somit ein Teigling gefertigt, der eine im Wesentlichen flache Form aufweist und mit zumindest einer nach oben offenen Aufnahmemulde versehen ist. Der Teigling kann hinsichtlich seiner Außenabmessungen beliebig gestaltet werden, beispielsweise rund, rechteckig oder quadratisch. Demgemäß ist es auch möglich, die zumindest eine Aufnahmemulde rund, offen oder quadratisch auszubilden, angepasst an die Form des Teiglings, so dass sich ein gleichmäßiger Randbereich ergibt. Es ist jedoch auch möglich, mehrere Aufnahmemulden vorzusehen. Die Dimensionierung, insbesondere die Tiefe der Aufnahmemulde hängt von den jeweiligen Abmessungen der fertigen Backware ab. Erfindungsgemäß ist eine sehr flache Aufnahmemulde ebenso möglich, wie eine relativ tiefe Aufnahmemulde, welche einen beträchtlichen Teil der Höhe des Teiglings bzw. der fertigen Backware umfasst.

Die Tiefe der Aufnahmemulde hängt auch ab von der Konsistenz der nachfolgend aufzubringenden Bindemasse. Hierauf wird im folgenden Verfahrensschritt eingegangen.

In dem nächsten Verfahrensschritt wird eine Bindemasse in die Aufnahmemulde eingefüllt bzw. auf die Oberfläche des nichtgebackenen Teiglings aufgebracht. Die Bindemasse kann beispielsweise mittels eines Füllbalkens dosiert und aufgebracht werden.

Erfindungsgemäß dient die Bindemasse (Slurry) dazu, die nachfolgend aufzubringenden Zusatzobjekte zu fixieren und zu umschließen. Beim Backen der Backware kocht die Bindemasse und umschließt dabei die Zusatzobjekte.

Die Bindemasse weist folgende Zusammensetzung (in Gewichtsanteilen) auf:

| | |
|---|---|
| Weißzucker | 3 - 6 |
| Wasser | unter 2 |
| Erdnusspaste | 0,5 - 2,5 |
| Speisesalz | unter 0,5 |
| Butterfett | 1 - 4 |
| Erdnussaroma | 0,3 - 1,2 |
| Vanillinstaubzucker | 0,03 - 0,07 |
| Lecithin | unter 0,15 |
| Kondensmagermilch | unter 3 |
| Glukosesirup | unter 3 |

Nach dem Einfüllen oder Aufbringen der Bindemasse erfolgt erfindungsgemäß das Einfüllen oder Aufbringen von Zusatzobjekten. Diese können beispielsweise in Form von Nüssen, Erdnüssen oder anderen Objekten bestehen. Dabei ist es möglich, Mischungen zu verwenden oder für eine Backware jeweils gleiche Zusatzobjekte einzufüllen oder aufzubringen. Das Dosieren erfolgt beispielsweise mittels einer Trommel unter Schwerkrafteinfluss, um auf diese Weise eine volumetrische Dosierung vorzunehmen.

Nachfolgend wird erfindungsgemäß der mit den Zusatzobjekten belegte Teigling gebacken. Dabei kocht, wie erwähnt, die Bindemasse und umschließt die Zusatzobjekte auf der Backware bzw. dem Gebäck. Dabei entsteht bevorzugterweise eine Karamellisierung. Diese führt zu einer guten und beständigen Fixierung der Zusatzobjekte.

Bevorzugterweise erfolgt nach dem Backen eine Kühlung der Fertigware, beispielsweise mittels einer Stahlbandkühlung auf einem Ofenband.

Anschließend an die Kühlung erfolgt eine Verpackung der Fertigware, beispielsweise mittels eines Waagensystems.

In einer besonders günstigen Ausgestaltung der Erfindung ist vorgesehen, dass nach dem Einfüllen oder Auflegen der Zusatzobjekte zumindest im Bereich der Aufnahmemulde der Teigling zusammen mit den Zusatzobjekten mit einer Zusatzlösung besprüht wird. Diese kann bevorzugterweise in Form einer Glanzlösung ausgebildet sein. Es ist erfindungsgemäß auch möglich, den gesamten Teigling zu besprühen. Die Besprühung erfolgt bevorzugterweise, um einen Glanz auf der Gebäckoberfläche der Backware zu erzeugen. Die Besprühung wird erfindungsgemäß beispielsweise erfindungsgemäß eines "Arcallscheibensystems" durchgeführt.

Erfindungsgemäß wird zur Besprühung mittels der Glanzlösung eine Zusammensetzung aus Wasser und Milchprotein verwendet. Dabei kann beispielsweise ein Fertigpulver, welches aus Milchprotein besteht, in Wasser gelöst werden. So ist es beispielsweise möglich, einen Gewichtsanteil Fertigpulver in 7-10 Gewichtsanteilen Wasser zu lösen. Das Fertigpulver ist beispielsweise ein Trockenpulver des Typs "Aeggin-Dauerglanzstreiche" der Fa. Aromatic.

Im Folgenden wird die Erfindung anhand eines Ausführungsbeispiels in Verbindung mit der Zeichnung beschrieben. Dabei zeigt:

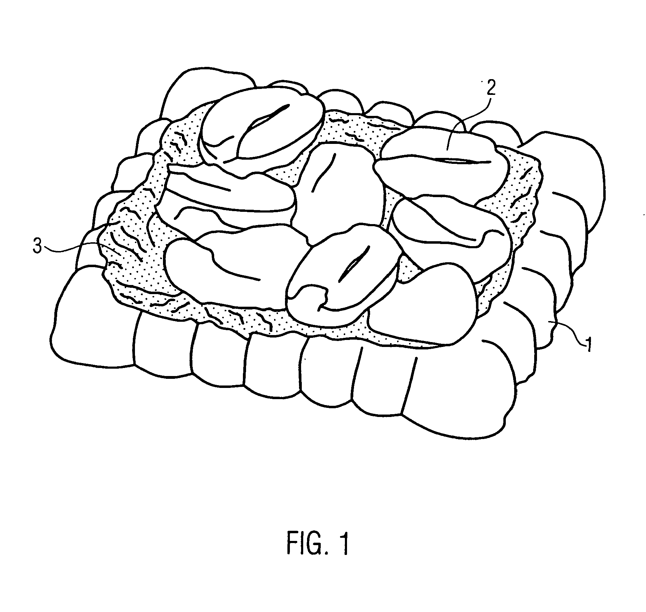

- Fig. 1: eine perspektivische Ansicht einer erfindungsgemäßen Backware.

Die erfindungsgemäße Backware ist im Wesentlichen in Form eines Kekses 1 ausgebildet, welcher mit einer konturierten oder gerippten Außenkante versehen ist, so wie dies aus dem Stand der Technik bekannt ist.

Im zentrischen Bereich der Backware 1 (Keks) ist eine Aufnahmemulde ausgebildet, in welcher sich im fertigen Zustand eine karamellisierte Bindemasse 3 befindet, welche mehrere Erdnüsse 2 fest fixiert und bindet.

Die Auswahl der Erdnüsse 2 erfolgt so, dass diese keine Qualitätseinbußen hinsichtlich Fettverderb aufweisen und ein vorbestimmtes Verhältnis zweier Fettsäurearten haben. Bei dem Ausführungsbeispiel werden blanchierte Erdnusskerne (Arachis Hypogaea L.) Typ Runner, Ursprungsland USA, Größe 40/50 pro Unze, Qualität "Oxy-stab", mit einem Ölsäure/Linolsäure-Ratio von mind. 10 verwendet.

Im Rahmen der Beschreibung der Erfindung wird der Begriff "Nüsse" in allgemeiner, trivialer Form verwendet, nicht hinsichtlich der botanisch korrekten Bestimmung.

Bei der Verwendung von Erdnüssen werden bevorzugterweise geröstete Erdnüsse verwendet.

### Bezugszeichenliste

- 1: Backware/Keks
- 2: Erdnuss/Zusatzobjekt
- 3: Bindemasse/Slurry

## Patentansprüche

1. Verfahren zur Herstellung einer Dauerbackware mit folgenden Schritten:
- Herstellung eines Teigs,
- Fertigung eines Teiglings aus dem Teig in im Wesentlichen flacher Form mit zumindest einer nach oben offenen Aufnahmemulde,
- Einfüllen einer Bindemasse (3) in die Aufnahmemulde, wobei als Bindemasse (3) eine Mischung mit folgenden Bestandteilen (Gewichtsanteile) verwendet wird:
| | |
|---|---|
| Weißzucker | 3-6 |
| Wasser | unter 2 |
| Erdnusspaste | 0,5 - 2,5 |
| Speisesalz | unter 0,5 |
| Erdnussaroma | 0,3-1,2 |
| Vanillinstaubzucker | 0,03 - 0,07 |
| Lecithin | unter 0,15 |
| Kondensmagermilch | unter 3 |
| Glukosesirup | unter 3; |
- Einfüllen von zumindest einem nussartigen Zusatzobjekt (1) in die Aufnahmemulde,
- Besprühen zumindest des Bereichs der Aufnahmemulde mit den Zusatzobjekten (1) mit einer Glanzlösung, welche eine Zusammensetzung mit Wasser und Milchprotein verwendet,
- Backen des Teiglings.

2. Verfahren nach Anspruch 1, **dadurch gekennzeichnet, dass** als Zusatzobjekte (1) Erdnüsse in die Aufnahmemulde eingefüllt werden.

3. Verfahren nach Anspruch 1 oder 2, **dadurch gekennzeichnet, dass** gleichartige Zusatzobjekte in die Aufnahmemulde eingefüllt werden.

4. Verfahren nach Anspruch 1 oder 2, **dadurch gekennzeichnet, dass** ungleichartige Zusatzobjekte in die Aufnahmemulde eingefüllt werden.

5. Verfahren nach einem der Ansprüche 1 bis 4, **dadurch gekennzeichnet, dass** der Teig in Form eines Keksteigs ausgebildet ist.

6. Verfahren nach einem der Ansprüche 1 bis 4, **dadurch gekennzeichnet, dass** der Teig in Form eines Dauerbackwarenteigs ausgebildet ist.

7. Verfahren nach einem der Ansprüche 1 bis 6, **dadurch gekennzeichnet, dass** die Backware quadratisch ausgebildet wird.

8. Verfahren nach einem der Ansprüche 1 bis 6, **dadurch gekennzeichnet, dass** die Backware rechteckig ausgebildet wird.

9. Verfahren nach einem der Ansprüche 1 bis 8, **dadurch gekennzeichnet, dass** die Backware rund ausgebildet wird.

10. Dauerbackware mit einer im Wesentlichen flachen Grundform, welche mit einer nach oben offenen Aufnahmemulde versehen ist, in welcher eine Bindemasse angeordnet ist, durch welche Zusatzobjekte fixiert sind und auf welche vor dem Backen zumindest ein nussartiges Zusatzobjekt (1) aufgelegt ist, wobei zumindest der Bereich der Aufnahmemulde mit dem Zusatzobjekt (1) mit einer Glanzlösung besprüht ist, welche eine Zusammensetzung mit Wasser und Milchprotein ist, wobei die Bindemasse folgende Zusammensetzung aufweist:
| | |
|---|---|
| Weißzucker | 3-6 |
| Wasser | unter 2 |
| Erdnusspaste | 0,5 - 2,5 |
| Speisesalz | unter 0,5 |
| Butterfett | 1-4 |
| Erdnussaroma | 0,3 - 1,2 |
| Vanillinstaubzucker | 0,03 - 0,07 |
| Lecithin | unter 0,15 |
| Kondensmagermilch | unter 3 |
| Glukosesirup | unter 3. |

11. Backware nach Anspruch 10, **dadurch gekennzeichnet, dass** die Zusatzobjekte Erdnüsse sind.

12. Backware nach einem der Ansprüche 10 oder 11, **dadurch gekennzeichnet, dass** gleiche Zusatzobjekte vorgesehen sind.

13. Backware nach einem der Ansprüche 10 oder 11, **dadurch gekennzeichnet, dass** ungleiche Zusatzobjekte vorgesehen sind.

## Claims

1. A method for producing a long shelf-life bakery product, comprising the following steps:
- producing a dough,
- preparing a dough piece having a substantially flat shape from the dough, the piece having at least one receiving depression that is open toward the top,
- adding a binding mass (3) to the receiving depression, wherein a composition including the following components (weight proportion) is used as the binding mass (3):
| | |
|---|---|
| white refined sugar | 3-6 |
| water | less than 2 |
| peanut paste | 0.5 to 2.5 |
| table salt | less than 0.5 |
| butterfat | 1-4 |
| peanut flavour | 0.3-1.2 |
| vanillin powered sugar | 0.03 - 0.07 |
| lecithine | less than 0.15 |
| condensated low fat milk | less than 3 |
| glucose syrup | less than 3 |
- adding at least one nut-type additional item (1) to the receiving depression,
- spraying at least the region of the receiving depression including the additional items (1) with a shining solution using a composition including water and milk protein,
- baking the dough piece.

2. The method of claim 1, **characterized in that** peanuts are added into the receiving depression as the additional items (1).

3. The method of claim 1 or 2, **characterized in that** additional items of similar type are added into the receiving depression.

4. The method of claim 1 or 2, **characterized in that** additional items of unsimilar type are added into the receiving depression.

5. The method of one of claims 1 to 4, **characterized in that** the dough is formed as a biscuit dough.

6. The method of one of claims 1 to 4, **characterized in that** the dough is formed as a long shelf-life bakery dough.

7. The method of one of claims 1 to 6, **characterized in that** the bakery product is formed as a square.

8. The method of one of claims 1 to 6, **characterized in that** the bakery product is formed as a rectangle.

9. The method of one of claims 1 to 8, **characterized in that** the bakery product is formed round.

10. A long shelf-life bakery product, having a substantially flat basic shape which is provided with a receiving depression that is open toward the top, in which a binding mass is arranged, with which additional items are fixed in place and onto which at least one nut-type additional item (1) is placed prior to baking, wherein at least the region of the receiving depression including the additional object (1) is sprayed with a shining solution being a composition of water and milk protein, wherein the binding mass has the following composition:
| | |
|---|---|
| white refined sugar | 3-6 |
| water | less than 2 |
| peanut paste | 0.5 to 2.5 |
| table salt | less than 0.5 |
| butterfat | 1 - 4 |
| peanut flavour | 0.3 - 1.2 |
| vanillin powered sugar | 0.03 - 0.07 |
| lecithine | less than 0.15 |
| condensated low fat milk | less than 3 |
| glucose syrup | less than 3 |

11. The bakery product of claim 10, **characterized in that** the additional objects are peanuts.

12. The bakery product of one of claims 10 or 11, **characterized in that** additional items of similar type are provided.

13. The bakery product of one of claims 10 or 11, **characterized in that** additional items of unsimilar type are provided.

## Revendications

1. Procédé de fabrication d'un article de biscuiterie à la longue conservation comprenant les étapes suivantes :
- la fabrication d'une pâte,
- la fabrication à partir de la pâte d'un pâton présentant sensiblement une forme plate à l'aide d'au moins une cavité de réception ouverte vers le haut,
- le versement d'une masse de liant (3) dans la cavité de réception, un mélange comprenant les composants suivants (parts en poids) étant utilisé comme masse de liant (3) :
| | |
|---|---|
| sucre blanc | 3 - 6 |
| eau | moins de 2 |
| pâte d'arachide | 0,5 - 2,5 |
| sel de cuisine | moins de 0,5 |
| matière grasse laitière | 1 - 4 |
| arôme arachide | 0,3-1,2 |
| sucre glace vanillé | 0,03 - 0,07 |
| lécithine | moins de 0,15 |
| lait écrémé concentré | moins de 3 |
| sirop de glucose | moins de 3, |
- le versement d'au moins un objet additionnel de type noix (1) dans la cavité de réception,
- l'aspersion d'au moins la zone de la cavité de réception comprenant les objets additionnels (1) avec une solution de glaçage utilisant une composition d'eau et de protéine de lait,
- la cuisson du pâton.

2. Procédé selon la revendication 1, **caractérisé en ce que** des arachides en tant qu'objets additionnels (1) sont versées dans la cavité de réception.

3. Procédé selon la revendication 1 ou 2, **caractérisé en ce que** des objets additionnels similaires sont versés dans la cavité de réception.

4. Procédé selon la revendication 1 ou 2, **caractérisé en ce que** des objets dissimilaires différents sont versés dans la cavité de réception.

5. Procédé selon l'une quelconque des revendications 1 à 4, **caractérisé en ce que** la pâte est conçue sous forme d'une pâte à biscuit.

6. Procédé selon l'une quelconque des revendications 1 à 4, **caractérisé en ce que** la pâte est conçue sous forme d'une pâte à biscuit longue conservation.

7. Procédé selon l'une quelconque des revendications 1 à 6, **caractérisé en ce que** le produit de boulangerie présente une forme carrée.

8. Procédé selon l'une quelconque des revendications 1 à 6, **caractérisé en ce que** le produit de boulangerie présente une forme rectangulaire.

9. Procédé selon l'une quelconque des revendications 1 à 8, **caractérisé en ce que** le produit de boulangerie présente une forme ronde.

10. Article de biscuiterie longue conservation comprenant une forme de base sensiblement plate pourvue d'une cavité de réception ouverte vers le haut dans laquelle est disposée une masse de liant permettant de fixer les objets additionnels et sur laquelle est posé au moins un objet additionnel (1) avant la cuisson, au moins la zone de la cavité de réception comprenant l'objet additionnel (1) étant aspergée d'une solution de glaçage composée d'eau et de protéine laitière,
la masse de liant comprenant la composition suivante :
| | |
|---|---|
| sucre blanc | 3 - 6 |
| eau | moins de 2 |
| pâte d'arachide | 0,5 - 2,5 |
| sel de cuisine | moins de 0,5 |
| matière grasse laitière | 1 - 4 |
| arôme arachide | 0,3 - 1,2 |
| sucre glace vanilliné | 0,03 - 0,07 |
| lécithine | moins de 0,15 |
| lait écrémé concentré | moins de 3 |
| sirop de glucose | moins de 3. |

11. Produit de boulangerie selon la revendication 10, **caractérisé en ce que** les objets additionnels sont des arachides.

12. Produit de boulangerie selon l'une quelconque des revendications 10 ou 11, **caractérisé en ce que** des objets additionnels identiques sont prévus.

13. Produit de boulangerie selon l'une quelconque des revendications 10 ou 11, **caractérisé en ce que** des objets additionnels différents sont prévus.
